# EUROPEAN PATENT APPLICATION

(11) **EP 1 793 359 A1**
(43) Date of publication of application: **06.06.2007**
(21) Application number: 05781046.7
(22) Date of filing: 29.08.2005
(51) Int. Cl.: G09C 1/00

(54) **CONTENT PURCHASE PROCESSING TERMINAL ,METHOD THEREOF, AND PROGRAM**

(30) Priority: 31.08.2004 JP 2004252990
(71) Applicant: MATSUSHITA ELECTRIC INDUSTRIAL CO., LTD., Osaka 571-8501 (JP); SONY CORPORATION, Tokyo 141-0001 (JP)
(72) Inventor: KAWAGUCHI, Toru, Osaka-shi, Osaka 540-6319 (JP); YAMAGISHI, Yasuaki, Tokyo (JP)
(74) Representative: Pautex Schneider, Nicole Véronique
(86) International application number: PCT/JP2005/015636
(87) International publication number: WO 2006/025308

(57) **Abstract**

The object of the present invention is to provide a content purchase processing terminal which achieves smooth purchase processing of a content without the need for burdensome interactions between a content distributor and a user who wants to purchase the content. The present invention provides a content purchase processing terminal which includes a secret information managing section for managing secret information on the user and the terminal, an authentication processing section for authenticating whether metadata selected by the user has been issued by the distributor, and a purchase processing section for requesting the purchase processing of the content by means of the secret information from the secret information managing section when the metadata is successfully authenticated.

## Description

### BACKGROUND OF THE INVENTION

### Field of the Invention

The present invention relates to a content purchase processing terminal for purchasing contents, and a method thereof.

### Description of the Related Art

In recent years, metadata serving as the attribute information of digital contents has been standardized by the TV Anytime Forum and so on. Content and service providers create metadata corresponding to contents and service, and the metadata can be offered on servers or distributed to terminals. By searching metadata based on information such as a title and an outline, users can retrieve and use desired contents. Patent Reference 1 discloses such a conventional technique for accessing contents through metadata.

In a conventional content sales system, generally users decide to purchase products by browsing, on websites or the like, product information from content distributors and contents are available through downloading or streaming. In order to purchase a desired content, a user conducts a keyword search by the title or outline of the content on a search engine or the like, accesses a site selling the desired content based on a number of search results, decides to purchase the content based on detailed price information and so on, and performs purchase processing, which results in a number of interactions before the purchase of the desired content. In order to reduce such interactions, Patent Reference 1 discloses a mechanism enabling a user to conduct a search using metadata on a terminal, select desired metadata after browsing and comparing information such as contents, and access a content sales site based on the metadata.
Patent Reference 1: Japanese Patent Laid-Open No. 2004-30301

### SUMMARY OF THE INVENTION

In Patent Reference 1, however, in order to access a content sales site and purchase a desired content, a user account is necessary on the provider of the accessed content sales site. In other words, a user having no registered account cannot purchase the content unless the user applies an account and undergoes credit/confirmation processing. In many cases, users who want to purchase contents give up the purchase of the contents because of such burdensome interactions and content distributors miss business opportunities.

In consideration of the problem, it is desirable for the present invention to provide a content purchase processing terminal, a method thereof, and a program whereby a content can be smoothly purchased without the need for burdensome interactions between a content distributor and a user who wants to purchase the content.

The present invention is a content purchase processing terminal including a secret information managing section for managing secret information on a user and the terminal, an authentication processing section for authenticating whether metadata selected by the user has been issued by a distributor, and a purchase processing section for requesting the purchase processing of a content by means of the secret information from the secret information managing section when the metadata is successfully authenticated.

According to the present invention, authentication is performed to confirm whether metadata selected by a user is reliable or not. Only when the metadata is authenticated, secret information indicating user-specific and terminal-specific information is read, and the purchase of a content is requested using the secret information. Therefore, after the metadata is selected, the content is automatically purchased and obtained. With this operation, it is possible to smoothly purchase a content without the need for burdensome interactions between a content distributor and a user who wants to purchase the content.

### BRIEF DESCRIPTION OF THE DRAWINGS

FIG. 1 is a diagram showing an example of the configuration of a system using a content purchase processing terminal of the present invention;
FIG. 2 is a diagram showing an example of the internal configuration of the content purchase processing terminal and the relationship between the terminal and servers;
FIG. 3 is a flowchart showing the steps of purchasing a content;
FIG. 4 is a diagram showing an example of search request screen;
FIG. 5 is a diagram showing metadata managed in a hierarchical manner;
FIG. 6 is a diagram showing an example of the configuration of the metadata indicating a sales object;
FIG. 7 is a diagram showing an example of the schema (data structure) of price information;
FIG. 8 shows an example of the instance (data is actually stored) of price information;
FIG. 9 is a diagram showing an example of a search result screen;
FIG. 10 is a diagram showing an example of the schema (data structure) of a purchase procedure;
FIG. 11 is a diagram showing an example of the instance (data is actually stored) of the purchase procedure;
FIG. 12 is a diagram showing an example of the configuration of secret information managed by a secret information managing section;
FIG. 13 is a flowchart showing the steps of updating authentication information stored in an authentication information storage section;
FIG. 14 is a diagram showing information stored in the authentication information storage section for each distributor;
FIG. 15 is a diagram showing an example of the configuration of an authentication information list;
FIG. 16 is a diagram showing the relationship of the authentication information stored in the authentication information storage section for each distributor; and
FIG. 17 is a diagram showing an example of the configuration of metadata indicating a purchase procedure in a distributor-specific region.

### DETAILED DESCRIPTION OF THE PREFERRED EMBODIMENTS

Preferred embodiments for implementing the present invention will be described below in accordance with the accompanying drawings. The present invention is not limited to the embodiments and a proper modification may be made without departing from the gist of the present invention.

### (Embodiment 1)

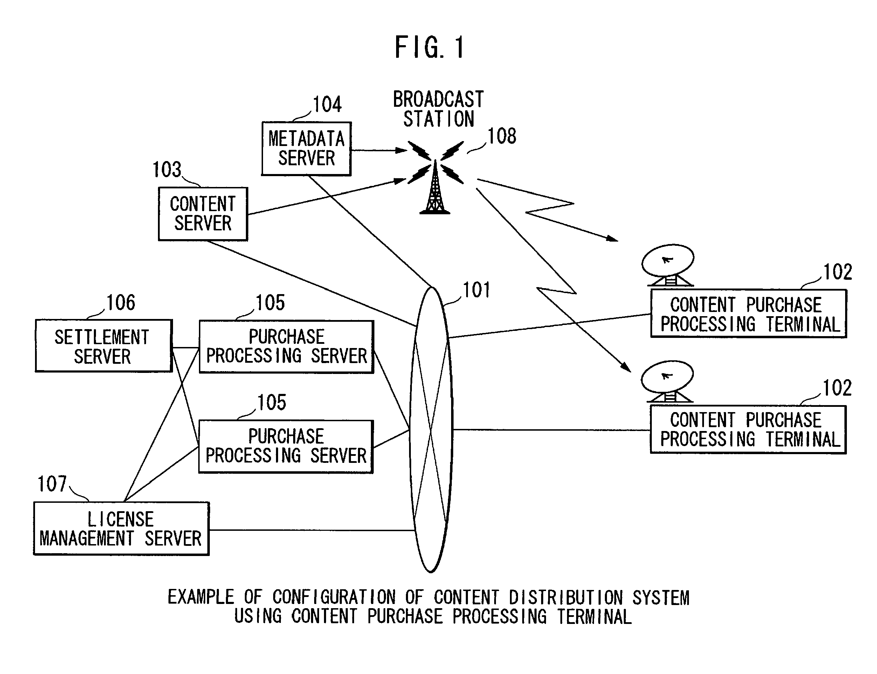

Embodiment 1 of the present invention will be discussed below. FIG. 1 shows an example of the configuration of a content distribution system in which content purchase processing terminals are used. The system includes various servers and content purchase processing terminals 102. The servers and the terminals are connected to one another via a network 101 which is typified by the Internet and a cellular phone network or the like. The servers include a content server 103, a metadata server 104, purchase processing servers 105, a settlement server 106, and an license management server 107.

The content purchase processing terminal 102 is, for example, a digital television receiver, a digital television recorder, a portable terminal having a digital television receiving function, and a personal computer. The content purchase processing terminal 102 is provided in an ordinary household or a workplace and has the function of receiving radio waves from a broadcast station 108 and enabling users to view programs. Further, the content purchase processing terminal 102 is connected to the network 101 and has the function of communicating with the servers.

The content server 103 stores contents including images, sounds and various kinds of data. The content server 103 has the function of providing the contents to the content purchase processing terminals 102 through the network 101. The content server 103 may provide the stored contents to the broadcast station 108, and the contents may be distributed as broadcast waves from the broadcast station 108 in a multiplexed manner. The contents in the system are encrypted when necessary.

The metadata server 104 stores metadata corresponding to the contents stored in the content server 103. The metadata server 104 has the function of providing the metadata to the content purchase processing terminals 102 through the network 101. The metadata server 104 may provide the stored metadata to the broadcast station 108, and the metadata may be distributed as broadcast waves from the broadcast station 108 in a multiplexed manner.

The purchase processing servers 105 store the identifiers and price information of the contents stored in the content server 103. The identifiers and the price information are associated with each other. The purchase processing server 105 has the function of requesting settlement to the settlement server 106 in response to a request for purchase processing from the content purchase processing terminal 102. Further, the purchase processing server 105 is notified of a settlement result from the settlement server 106 and informs the content purchase processing terminal 102 of the completion of the purchase processing. Moreover, the purchase processing server 105 has the function of requesting the license management server 107 to issue license for a purchased content. The purchase processing server 105 is operated by, for example, a content distributor.

The settlement server 106 is, for example, an online system or the like of a credit card company. The settlement server 106 has the function of settling accounts in response to a request for settlement from the purchase processing server 105 and notifying the purchase processing server 105 of a settlement result.

The license management server 107 stores the license corresponding to the content. The license includes the decryption key of the content and usage conditions such as a time period during which the content can be played and the number of times of reproduction. The license management server 107 has the function of, in response to a request for license from the purchase processing server 105, issuing license for the designated content purchase processing terminal 102 and storing the license.

The servers 103 to 107 are defined as logical functions and can be all configured on the same apparatus, combined apparatuses, or different apparatuses.

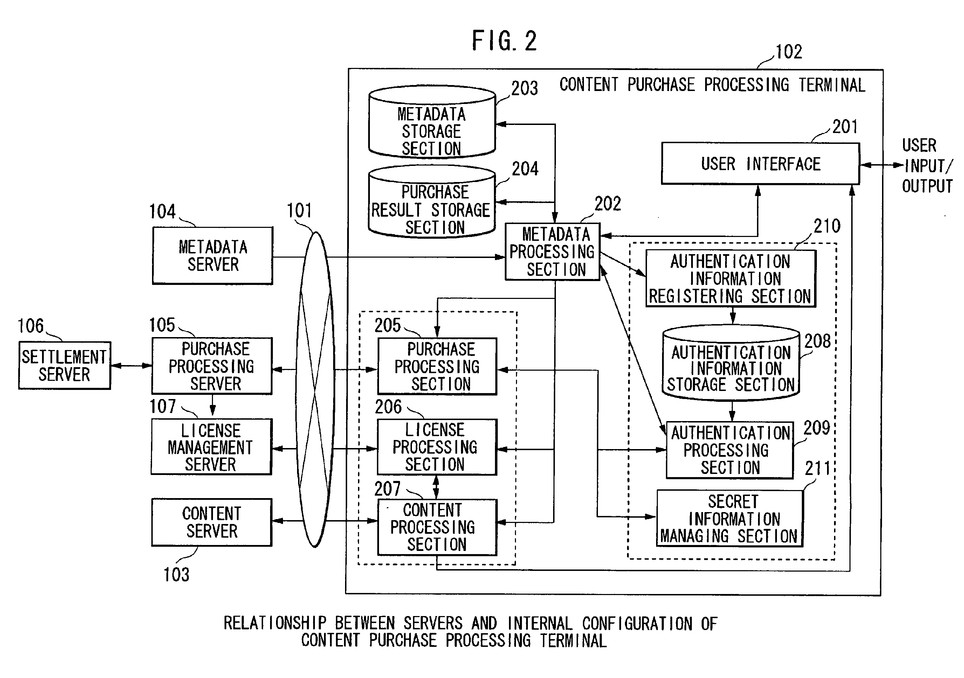

FIG. 2 shows an example of the internal configuration of the content purchase processing terminal 102 and a logical relationship with the servers. A user interface 201 is means for input/output processing to and from a user. The user interface 201 has the function of presenting various information and contents to the user and receiving various input operations from the user. The information is clearly presented to the user by a graphics user interface or the like, multiplexed in response to the video signal of a content when necessary, and displayed on a screen such as a television screen. To be specific, the user interface 201 receives various input operations from a user through operations on a remote controller, operations on the operation panel of the body of the content purchase processing terminal 102, or operations from other devices via a network.

A metadata processing section 202 has the function of acquiring necessary metadata from the metadata server 104 through the network 101 or a broadcast network automatically or in response to a request for processing from the user interface 201, and storing the metadata in a metadata storage section 203. Further, the metadata processing section 202 has the function of reading, in response to a request from the user interface 201, the metadata stored in the metadata storage section 203 and requesting processing from related processing sections according to information described in the metadata.

The metadata storage section 203 stores the metadata having been acquired from the metadata server 104 by the metadata processing section 202 through the network 101 or the broadcast network automatically or in response to a request for processing from the user interface 201. The metadata stored in the metadata storage section 203 is read by the metadata processing section 202 in response to a request from the user interface 201. Moreover, the metadata stored in the metadata storage section 203 is managed in a hierarchical manner.

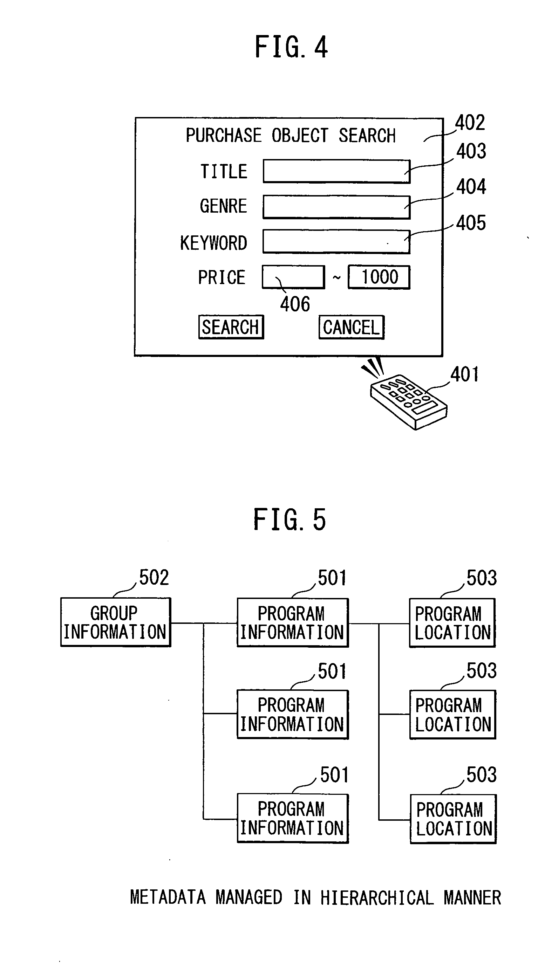

Referring to FIG. 5, the following will discuss an example of the configuration of metadata stored in the metadata storage section 203. FIG. 5 shows a representative configuration of metadata based on metadata specifications having been created by the TV Anytime Forum and issued as ETSI TS102 822 Part 3. The metadata is managed in a hierarchical manner and Program Information 501 corresponds to one content. Group Information 502 is a collection of Program Information 501 made up of one or more pieces of metadata. For example, a collection of two or more film contents can be represented as "the newest film package". Program Location 503 corresponds to a physical delivery method of one content. For example, when the same content is delivered by two methods of streaming and downloading, the content with the different delivery methods can be represented in a distinguished manner.

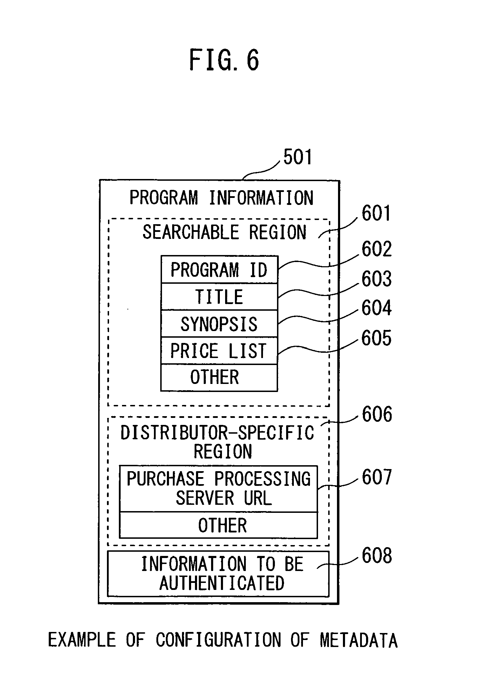

Referring to FIG. 6, Program Information 501 will be discussed below as an example of the configuration of metadata indicating a sales object. The metadata is divided into a searchable region 601, a distributor-specific region 606, and information 608 to be authenticated. In order to enable a user to select a content, the searchable region 601 describes the following viewable information: program Id 602 indicating the identifier of a content represented by Program Information 501, Title 603 indicating the name of the content represented by Program Information 501, Synopsis 604 indicating the summary of the content represented by Program Information 501, and Price List 605 indicating information about the price of the content represented by Program Information 501. The distributor-specific region 606 describes information for purchase processing performed when the user selects the content. A purchase processing server URL 607 indicates the internet address of the purchase processing server 105 connected when the content is purchased. The distributor-specific region 606 can be encrypted when necessary. The information 608 to be authenticated describes distributor authentication information for specifying a distributor who sells or manages the content, that is, information for proving that the content has been issued by the specific distributor. For example, a digital signature is added to obtain such authentication information. To be specific, XML Signature and so on defined by W3C (World Wide Web Consortium) are used. The distributor authentication information includes information such as the identifier of the distributor, a version, and a public key.

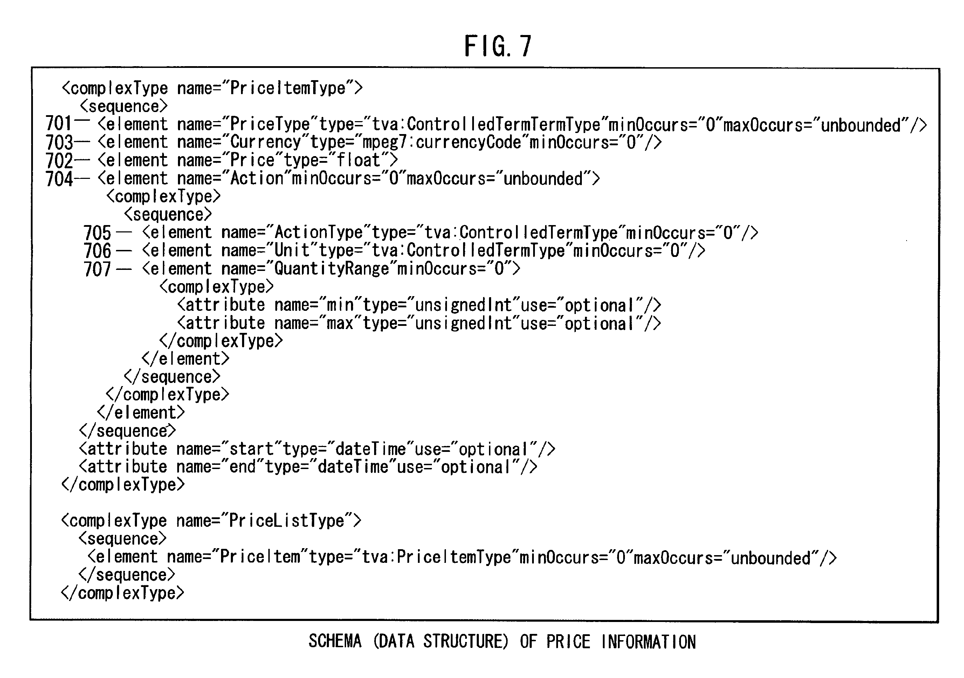

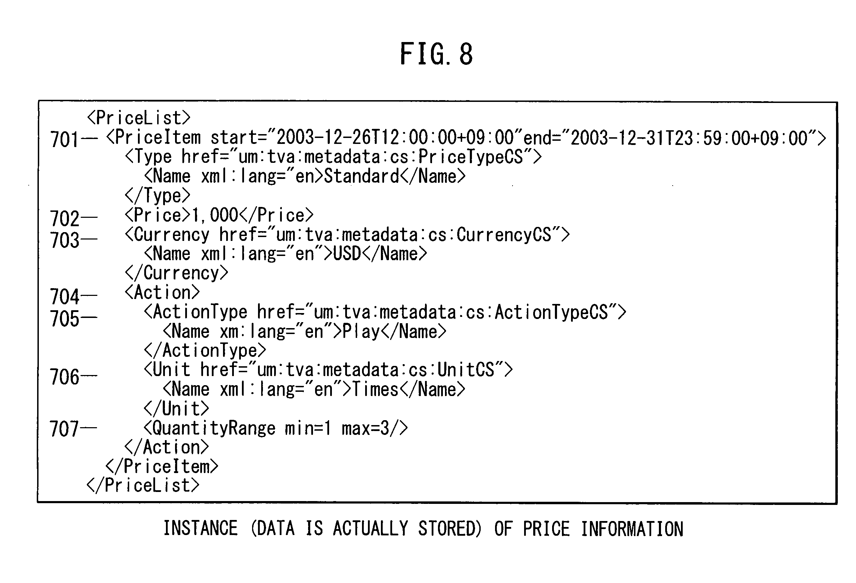

For specific explanation of Price List 605, FIG. 7 shows an example of a schema (data structure) and FIG. 8 shows an example of an instance (data is actually stored) . Price Type 701 indicates the type of price information, for example, whether the price is a standard price or a discount price. Price 702 indicates the price. Currency 703 indicates a currency unit used for the price information. Action 704 indicates a possible action performed on the content when the content is purchased based on the price information. Action Type 705 indicates the type of the action of Action 704. For example, Action Type 705 indicates that the content is purchased (permanently available) or the number of viewing times is limited (the content can be viewed three times). Unit 706 indicates a unit of a numeric value of Quantity Range 707. For example, when the number of viewing times is limited to N times, "times" is designated. Quantity Range 707 indicates a numeric value of the action of Action 704. For example, when the number of viewing times is limited to three times, "1 to 3" is designated. Price List 605 structured thus makes it possible to retrieve/display information on a content based on specific conditions including a price condition, the presence or absence of a discount, a currency unit, a period during which the price is applied, the number of viewing times, and a viewing period.

Further, information included in the searchable region 601 and information included in the distributor-specific region 606 can be used for Group Information 502 or Program Location 503. When the information is used for Group Information 502, the information indicates package sales. By purchasing the package, a user can collectively purchase two or more contents belonging to Group Information 502 . When the information is used for Program Location 503, the information indicates that a content is sold according to the method of acquiring the content. For example, the user can selectively purchase the downloaded version or the streaming version of one content.

A purchase result storage section 204 stores information on a purchased content. The purchase result storage section 204 stores information such as the identifier, the title, and the price of the content. When the metadata processing section 202 is notified of the completion of the purchase processing of the content from a purchase processing section 205, the purchase result storage section 204 registers the information on the content.

The purchase processing section 205 connects to the purchase processing server 105 via the network 101 in response to a request from the metadata processing section 202 and has the function of requesting, by using secret information from a secret information managing section 211, the purchase processing server 105 to perform purchase processing of a content when metadata selected by a user is successfully authenticated.

An license processing section 206 connects to the license management server 107 via the network 101 in response to a request from the metadata processing section 202 and has the function of acquiring, from the license management server 107, the license of the content having been purchased in response to the request from the purchase processing section 205.

A content processing section 207 connects to the content server 103 through the network 101 in response to a request from the metadata processing section 202 and acquires the purchased content from the content server 103, so that the content is used by means of the license acquired in the license processing section 206. Since the content acquired in the content processing section 207 has been encrypted, the content is decrypted and used by means of a decryption key included in the license. The content is presented to the user through the user interface 201.

An authentication information storage section 208 stores distributor authentication information for specifying a distributor who sells or manages the content presented in metadata. The distributor authentication information includes information such as the identifier of the distributor, a version, and a public key. Further, the distributor authentication information stored in the authentication information storage section 208 is managed in a hierarchical manner. High-order distributor authentication information manages low-order distributor authentication information which are associated with each other. A distributor to be authenticated may not be a distributor who sells or manages the content but may be, for example, a platform distributor who operates a facility used by the distributor or a metadata distributor who produces and distributes metadata for the distributor.

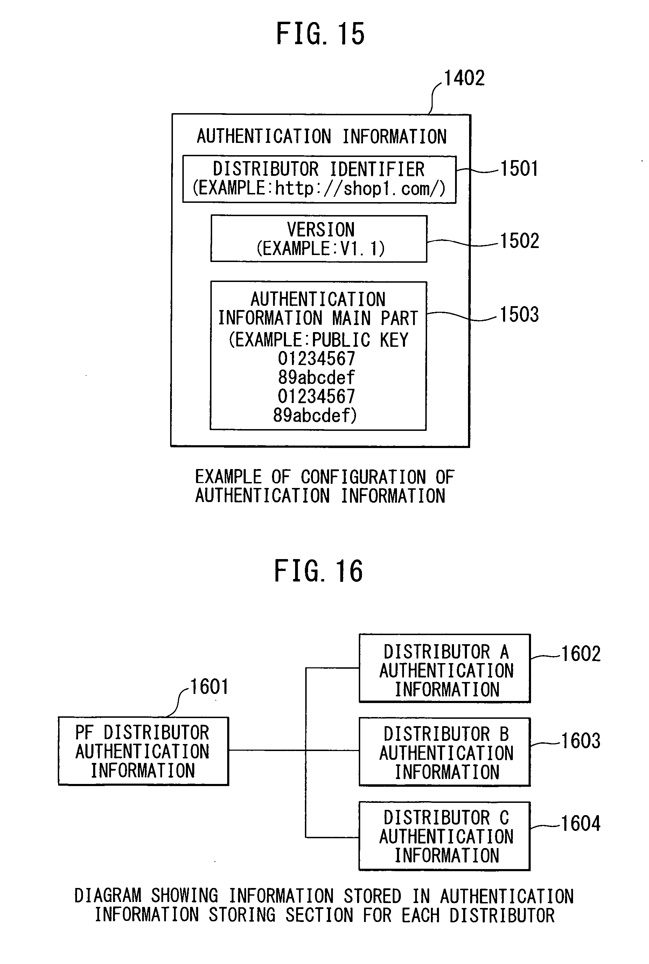

Referring to FIG. 16, the following will discuss authentication information stored in the authentication information storage section 208 for each distributor. Platform distributor authentication information 1601 includes information such as a version, a public key, and the identifier of a platform distributor who controls the overall service. Sales distributor authentication information 1602 to 1604 include information such as versions, public keys, and the identifiers of low-order sales distributors managed by the platform distributor. In the initial state, at least the platform distributor authentication information 1601 is registered in the authentication information storage section 208.

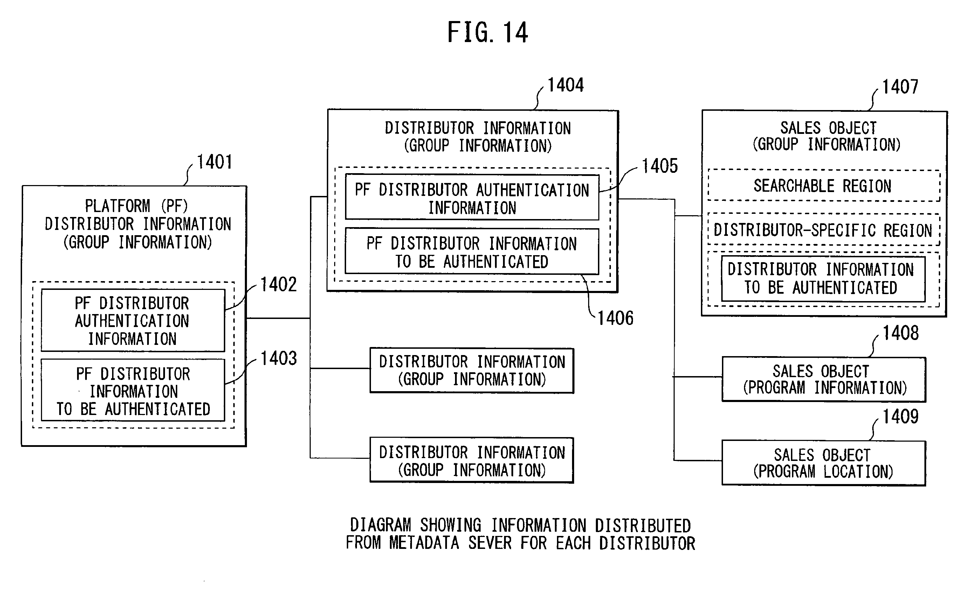

The following will describe the steps of registering, updating, and deleting, in the authentication information storage section 208, distributor authentication information included in metadata distributed from the metadata server 104. Referring to FIG. 14, the following will discuss authentication information for each distributor. The authentication information is included in metadata distributed from the metadata server 104. Platform distributor information 1401 describes information on the platform distributor who controls the overall service. The platform distributor information 1401 is, for example, made up of Group Information. The platform distributor information 1401 describes authentication information 1402 on the platform distributor and platform distributor information 1403 to be authenticated. The platform distributor information 1403 to be authenticated is necessary for authenticating the platform distributor information. The platform distributor authentication information 1402 is authentication information including the identifier of the distributor, a version, and a public key. The platform distributor information 1403 to be authenticated is authentication information for specifying the platform distributor. For example, a digital signature is added and more specifically, XML Signature and so on defined by W3C (World Wide Web Consortium) are used. An authentication processing section 209 performs authentication on the authentication information stored in the authentication information storage section 208, by using the platform distributor information 1403 to be authenticated. In the case of successful authentication, the platform distributor authentication information 1402 is registered in the authentication information storage section 208, so that the authentication information 1601 on the platform distributor in the authentication information storage section 208 is updated.

Sales distributor information 1404 describes information on individual sales distributors who operate service under contract with the platform distributor. The sales distributor information 1404 is made up of, for example, Group Information and forms a hierarchical structure by making a reference to the identifier of the high-order platform distributor. The sales distributor information 1404 describes authentication information 1405 on the sales distributors and platform distributor information 1406 to be authenticated. The platform distributor information 1406 is necessary for authenticating the sales distributor information. The sales distributor authentication information 1405 is authentication information such as the identifier of the distributor, a version, and a public key. The platform distributor information 1406 to be authenticated is authentication information for specifying the platform distributor. For example, a digital signature is added and more specifically, XML Signature and so on defined by W3C (World Wide Web Consortium) are used. The authentication processing section 209 performs authentication on authentication information stored in the authentication information storage section 208, by using the platform distributor information 1406 to be authenticated. In the case of successful authentication, the sales distributor authentication information 1405 is registered in the authentication information storage section 208, so that the authentication information 1602 on the sale distributor is registered or updated in the authentication information storage section 208.

Sales object information 1407 to 1409 indicate contents sold by the sales distributor information 1404 and are placed lower than the sales distributor information 1404. The sales object information 1407 to 1409 is made up of Group information, Program Information, Program Location and so on according to the type of the sales object. Like the metadata of FIG. 6, the sales object information 1407 includes a searchable region 601, a distributor-specific region 606, and information 608 to be authenticated.

The following will discuss an example of the contents of the platform distributor authentication information 1402 and the sales distributor authentication information 1405 which are described in metadata distributed from the metadata server 104 and stored in the authentication information storage section 208. As shown in FIG. 15, a distributor identifier 1501 indicates the identifier of a platform distributor or a sales distributor. A version 1502 is used for deciding whether the authentication information of the same distributor is updated or not. An authentication information main part 1503 indicates, for example, the public key or the like of the distributor.

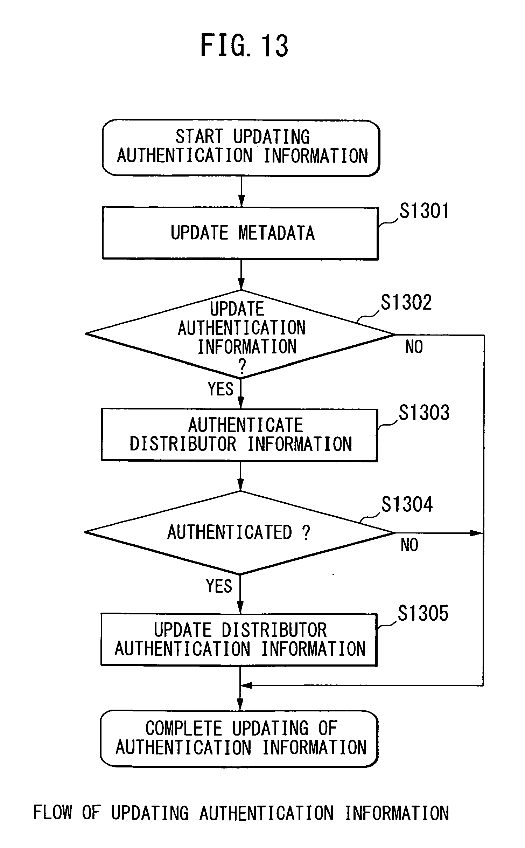

Referring to FIG. 13, the following will discuss the updating of the sales distributor authentication information 1405. The updating is performed in response to the registration, updating, or deletion of the sales distributor information 1404. In step 1301, metadata is received in the metadata processing section 202 from the metadata server 104 periodically or at a given time, and metadata stored in the metadata storage section 203 is updated. In step 1302, the metadata processing section 202 decides whether the updated metadata is the sales distributor information 1404 or not. When the updated metadata is the sales distributor information 1404, the process advances to step 1303. When the updated metadata is not the sales distributor information 1404, the authentication information is not updated (end) . In step 1303, in response to a request from the metadata processing section 202, authentication is performed in the authentication processing section 209 to decide whether the sales distributor information 1404 of the updated metadata is guaranteed by a high-order platform distributor.

The authentication can be performed using a typical mechanism of digital signature verification. To be specific, in the metadata server 104, the platform distributor creates a digital signature by using the secret key of the platform distributor and adds the digital signature to the sales distributor information 1404 as the platform distributor information 1406 to be authenticated. In the authentication processing section 209, the digitally signed platform distributor information 1406 to be authenticated is decrypted using a public key included in the platform distributor authentication information 1601 stored in the authentication information storage section 208. By comparing the information 1406 with the digest value of the sales distributor information 1404, it is confirmed whether the sales distributor information 1404 has been guaranteed by the platform distributor.

In step 1304, when the sales distributor information 1404 can be authenticated, the process advances to step 1305. When the sales distributor information 1404 cannot be authenticated, the authentication information is not updated (end) . In step 1305, the sales distributor authentication information 1405 in the authenticated sales distributor information 1404 is sent to an authentication information registering section 210 by the metadata processing section 202. The authentication information registering section 210 registers the sales distributor authentication information 1405 in the authentication information storage section 208. This step completes the registration of the sales distributor authentication information 1405 in the authentication information storage section 208.

The sales distributor authentication information 1405 is newly registered in the above explanation. In step 1305, for the sales distributor authentication information 1602 having been stored in the authentication information storage section 208, another sales distributor authentication information 1405 with the same distributor identifier 1501 and a different version 1502 may be updated. Further, the sales distributor authentication information 1405 may be deleted from the authentication information storage section 208 by designating an invalid value (e.g., a value with all the digits of hexadecimal FF values) for the authentication information and updating the sales distributor authentication information 1405.

The above explanation described the registration, updating, or deletion of the sales distributor authentication information 1405. The following will describe the case where the platform distributor authentication information 1402 is distributed using the platform distributor information 1401 instead of the sales distributor information 1404. In the authentication processing section 209, the digitally signed platform distributor information 1403 to be authenticated is decrypted using the public key included in the platform distributor authentication information 1601 stored in the authentication information storage section 208, and the platform distributor information 1403 to be authenticated is compared with the digest value of the platform distributor information 1401, so that it is confirmed whether the platform distributor information 1401 has been guaranteed by the platform distributor. When authentication can be performed in the authentication processing section 209, the platform distributor authentication information 1402 in the platform distributor information 1401 is sent to the authentication information registering section 210, and the authentication information registering section 210 registers the platform distributor authentication information 1402 in the authentication information storage section 208. This step completes the updating of the platform distributor authentication information 1402 in the authentication information storage section 208.

In the event of the leakage of the secret key used when the platform distributor or the sales distributor adds the information 1403 and 1406 to be authenticated, a third party may pretend as the distributor. In this case, another secret key is prepared, another piece of information to be authenticated is created for the platform distributor information 1401 or the sales distributor information 1404 by using the secret key, and the information is distributed from the metadata server 104. Meanwhile, authentication information is created which includes a public key corresponding to the secret key, and the platform distributor authentication information 1601 or the sales distributor authentication information 1602 stored in the authentication information storage section 208 is updated by the above method, so that it is possible to prevent a third party from pretending as the distributor. The authentication processing section 209 has the function of confirming, with reference to the authentication information stored in the authentication information storage section 208, whether or not metadata selected using the user interface 201 or metadata or the like acquired through the metadata processing section 202 is reliable.

The authentication information registering section 210 has the function of changing the authentication information stored in the authentication information storage section 208 in response to the registration, updating, or deletion of distributors who sell or manage contents or a distributor who hierarchically manages the distributors.

The secret information managing section 211 stores secret information including the terminal-specific information of the content purchase processing terminal 102 and information specific to the user of the terminal. The secret information managing section 211 is mounted as a tamper resistance memory or has the function of encryption, so that the contents cannot be read or tampered with ease.

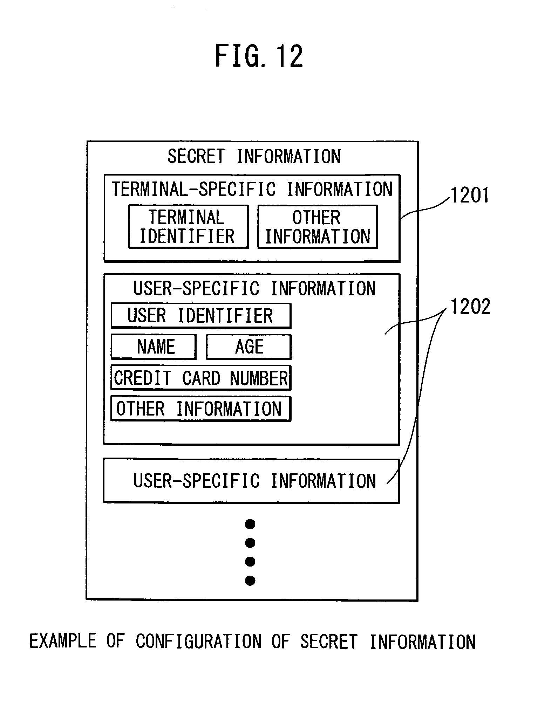

FIG. 12 shows secret information stored in the secret information managing section 211. Terminal-specific information 1201 is the only specific information of the content purchase processing terminal 102 and includes information such as a terminal identifier for identifying the terminal. User-specific information 1202 is created for each user of the content purchase processing terminal 102. The user-specific information 1202 includes the user identifier of a user on the terminal and personal information (name, credit card number, and so on) required for purchase processing. The user-specific information 1202 and the terminal-specific information 1201 can be acquired from the secret information managing section 211 only when metadata selected by the user is successfully authenticated.

The following will discuss the operations of the content purchase processing terminal 102 configured thus. Each configuration (not shown) of the content purchase processing terminal 102 is caused to function when a computer in the content purchase processing terminal 102 runs a content purchase processing program stored in a storage medium (not shown) .

A processing flow of acquiring a content in the content purchase processing terminal 102 is divided into the following steps: the user searches metadata and selects metadata based on a search result; authentication is performed on the selected metadata; secret information is read when the metadata is successfully authenticated; the read secret information is sent to the purchase processing server 105 to request the purchase processing of a content and obtain the license of the purchased content; and the purchased content is acquired.

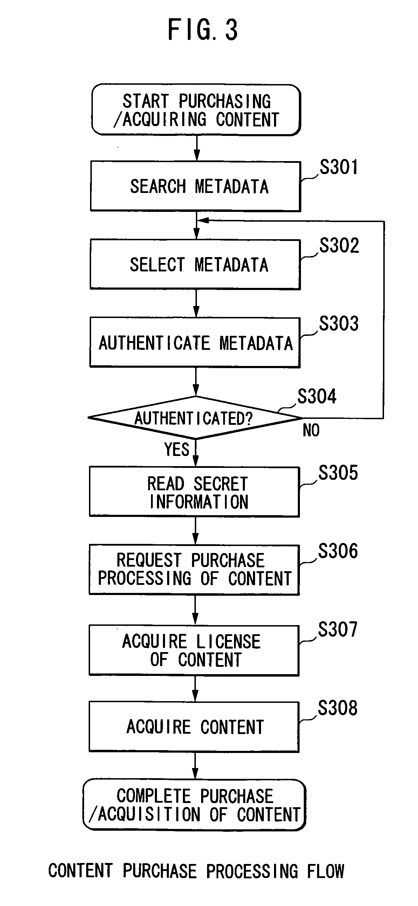

Referring to FIG. 3, the following will discuss a processing flow from the search of metadata to the acquisition of a content. In step 301, a user searches metadata. FIG. 4 shows an example of a search request screen 402 presented to the user. By using a remote control 401 or a keyboard (not shown) which makes up the user interface 201, the user inputs one or a combination of search conditions including "title"403, "genre"404, "keyword"405, and "price"406. The input search conditions are sent from the user interface 201 to the metadata processing section 202. From metadata stored in the metadata storage section 203, the metadata processing section 202 extracts metadata matching the search conditions. For example, when the search condition "price" is set at "1000 yen or lower", the metadata processing section 202 searches the metadata for Program Information 501 (when necessary, Group Information 502 and Program Location 503) in which Price List 605 includes Price 702 of 1000 or less, and the metadata processing section 202 obtains a search result.

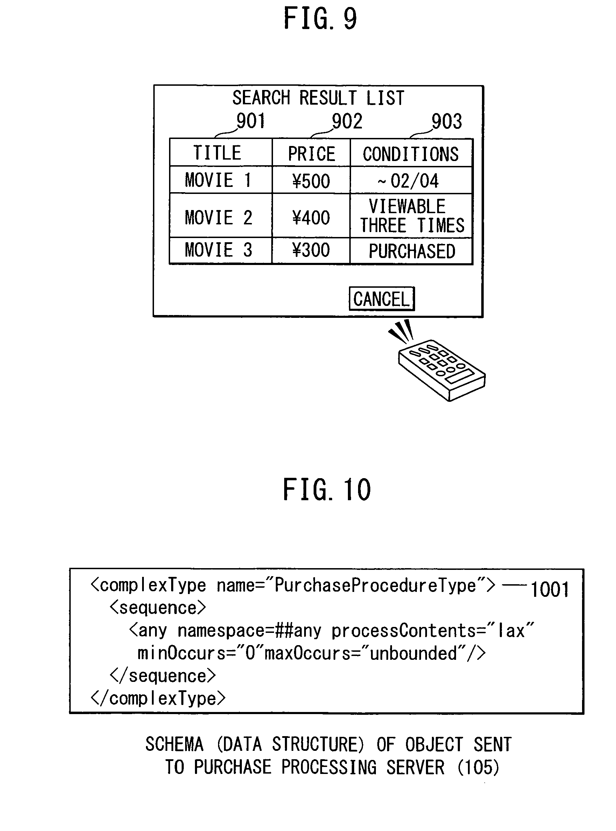

In step 302, metadata is selected based on the search result. The search result of the metadata having been processed by the metadata processing section 202 is sent to the user interface 201 and the user interface 201 presents a list of necessary information to the user. FIG. 9 shows an example of a search result screen presented to the user. A title 901 is displayed using Title 603 of the searchable region 601. A price 902 is displayed using Price 702 in Price List 605 of the searchable region 601. A condition 903 is displayed using Action 704 in Price List 605 of the searchable region 601. The user selects metadata with desired contents from the search result screen, so that the user indicates the intent to purchase the metadata. The selected metadata is sent from the user interface 201 to the metadata processing section 202.

In step 303, authentication is performed on the selected metadata. The metadata processing section 202 sends the selected metadata to the authentication processing section 209. The authentication processing section 209 performs authentication on the metadata by using the distributor authentication information stored in the authentication information storage section 208 and the information 608 to be authenticated. The information 608 to be authenticated is indicated in the sent metadata. With a typical mechanism of digital signature verification, the authentication processing section 209 can authenticate whether the metadata has been issued by the distributor or not. To be specific, when the metadata of FIG. 6 is selected, the information 608 to be authenticated with a digital signature or the like is decrypted using a public key included in the distributor authentication information stored in the authentication information storage section 208, and the information 608 to be authenticated is compared with the digest value of the metadata. When there is a match, it is decided that the metadata has been issued by the distributor.

When the selected metadata is authenticated in step 304, the process advances to step 305. When the metadata is not authenticated, the process returns to step 302. An authentication result obtained in the authentication processing section 209 is sent to the metadata processing section202. When the metadata is successfully authenticated, the process advances to step 305. When the selected metadata is not authenticated, the metadata processing section 202 notifies the user interface 201 that the metadata is not authenticated. In this case, the user selects metadata again or completes the processing to make another search.

In step 305, only when the selected metadata is authenticated, the metadata processing section 202 designates an identifier 602 of content described in the selected metadata and a URL 607 of the purchase processing server 105, and requests the purchase processing section 205 to perform purchase processing of the content. In response to a request from the metadata processing section 202, the purchase processing section 205 reads predetermined secret information managed by the secret information managing section 211. The secret information includes the identifiers of the terminal and the user and the credit card number of the user.

In step 306, the purchase processing section 205 requests the purchase processing server 105 to perform purchase processing of the content. Along with information including the identifiers of a terminal and a user and the credit card number of the user, which are read from the secret information managing section 211 and required for settlement, and the identifier of content to be purchased, the purchase processing section 205 requests the purchase processing server 105 designated by the URL to perform purchase processing of the content.

In the purchase processing server 105, the following processing is performed in response to the request for purchase processing from the purchase processing section 205. The identifier of the content and price information are associated with each other and stored in the purchase processing server 105, so that price information on the content designated by the purchase processing section 205 is obtained. The purchase processing server 105 sends the price information on the content, the identifier of the user, the credit card number of the user and so on to the settlement server 106. In the settlement server 106, settlement is performed using the sent price information, identifier of the user, credit card number of the user and so on. Thereafter, the purchase processing server 105 is notified of a settlement result from the settlement server 106. As a result, the user having user-specific information can purchase the content having the content identifier. The purchase processing server 105 notifies the purchase processing section 205 of the completion of the purchase processing.

Meanwhile, the purchase processing server 105 sends the identifier of the purchased content and the identifier of the terminal to the license management server 107, and requests the license management server 107 to issue the license of the content for the terminal. In response to the request, the identifier of the content, the identifier of the terminal, and the issued license are associated with one another and stored in the license management server 107.

The purchase processing section 205 having been notified of the completion of the purchase processing notifies the metadata processing section 202 of the completion of the purchase processing. The metadata processing section 202 registers in the purchase result storage section 204 the identifier and title of the purchased content and information including a price.

In step 307, in response to the request from the metadata processing section 202, the license processing section 206 acquires the license of the purchased content. The metadata processing section 202 designates the identifier of the content described in the selected metadata and requests the license processing section 206 to acquire the license. In response to the request, the license processing section 206 designates the content identifier for the license management server 107 and requests the acquisition of the license. The license management server 107 refers to the identifier of the connected terminal and sends a matched content identifier and license associated with the identifier of the terminal to the license processing section 206.

In step 308, in response to the request from the metadata processing section 202, the content processing section 207 connects to the content server 103 via the network 101, and acquires a content having the content identifier described in the selected metadata. Since the content acquired from the content server 103 is encrypted, the content processing section 207 requests license from the license processing section 206. The content processing section 207 can perform decoding using a decryption key included in the license having been obtained in step 307, so that the content can be used in the content purchase processing terminal 102.

In the usage of the content, a reference is made to information on a time period during which the content can be obtained (for example, described in Program Location 503 of FIG. 5). When the content is available at this point, the content is obtained immediately. When the content is not available, the content processing section 207 waits for a time when the content is available. When a content stored in the content server 103 is provided by streaming, the content is obtained immediately. In the case of downloading, the content is temporarily stored in a storage device (hard disk, removable medium, memory and so on) on the content purchase processing terminal 102. Alternatively, an encrypted content may be stored on a storage device through broadcasting or communications prior to the purchase of the content and the content may be decrypted and used when license is acquired.

The above step completes the purchase processing of a content selected by the user, the acquisition of license, and the acquisition of the content.

As described above, in the present embodiment, the user selects metadata from search results having been obtained based on search conditions such as a title, a genre, a keyword, or a price, authentication is performed to confirm whether the selected metadata is reliable or not, secret information indicating terminal-specific and user-specific information is read only when the metadata can be authenticated, and the purchase processing of a content is requested using the secret information. Thus, after the metadata is selected, the content is automatically purchased and obtained. Consequently, the content can be smoothly purchased without the need for burdensome interactions between a content distributor and a user who purchases the content.

Further, since authentication information stored in the content purchase processing terminal can be safely registered, updated, or deleted, it is possible to flexibly respond to a change of a sales distributor and perform authentication. Moreover, even in the case where the secret key of a distributor who sells or manages contents is leaked and the leakage raises the possibility of masquerade, authentication information can be easily updated on the content purchase processing terminal, thereby achieving a quick response preventing masquerade.

### (Embodiment 2)

Embodiment 2 of the present invention will be discussed below. In Embodiment 1, when the user selects metadata, a content is purchased according to a prescribed purchase procedure. In Embodiment 2, different purchase procedures are defined for respective contents or distributors who sell or manage contents. When a user selects metadata, a content is purchased according to a purchase procedure indicated in a distributor-specific region of the metadata. Embodiment 2 is similar to Embodiment 1 in the configuration of each section of the content purchase processing terminal 102 shown in FIG. 2, processing for registering, updating, and deleting authentication information managed in the authentication information storage section 208, processing in which a user searches metadata and selects metadata based on a search result and authentication is performed on the selected metadata (processing to step 304 in FIG. 3) and thus the overlapping explanation is omitted.

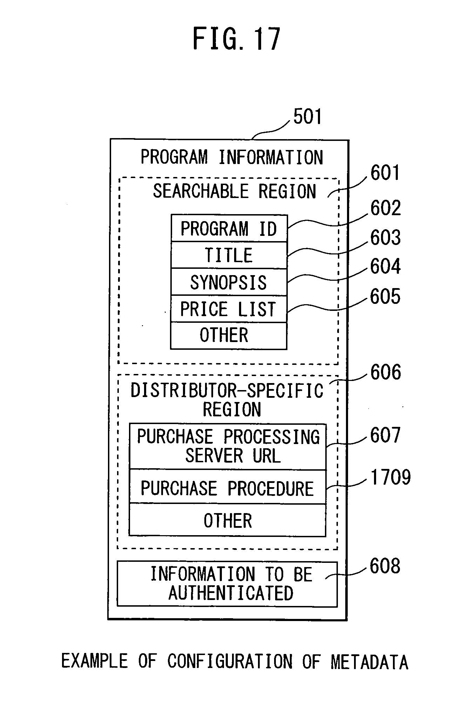

Referring to FIG. 17, the following will discuss an example of the configuration of metadata in which a distributor-specific region indicates a different purchase procedure defined for each distributor and content. Like the metadata of FIG. 6, the metadata is divided into a searchable region 601, a distributor-specific region 606, and information 608 to be authenticated. In FIG. 17, the distributor-specific region 606 of the metadata directly or indirectly indicates a purchase procedure 1709 in addition to a purchasing processing server URL 607. The purchase procedure 1709 is defined for each distributor and content.

In step 305 of the content purchase processing flow shown in FIG. 3, only when selected metadata can be authenticated, a purchase processing section 205 designates the URL 607 of a purchase processing server 105 and an identifier 602 of content in the selected metadata in response to a request from a metadata processing section 202. Further, the purchase processing section 205 reads predetermined secret information managed by a secret information managing section 211. The secret information includes the identifiers of a terminal and a user and the bank card number of the user. At this moment, the reading of the secret information in the purchase processing section 205 is processed according to the purchase procedure 1709 which is indicated directly or indirectly in the distributor-specific region 606 of the selected metadata.

When the purchase procedure 1709 is directly indicated in the distributor-specific region 606 of the metadata, the purchase processing section 205 reads secret information, stores predetermined information in an object, and requests the purchase processing server 105 to perform purchase processing according to the indicated purchase procedure.

When the purchase procedure 1709 is indirectly indicated in the distributor-specific region 606 of the metadata, the distributor-specific region 606 indicates the referent of an external application program (e.g., a JAVA (registered trademark) applet). The purchase processing section 205 acquires the application program from the referent and reads secret information, stores predetermined information in an object, and requests the purchase processing server 105 to perform purchase processing according to the purchase procedure indicated in the acquired program.

The contents of the purchase procedure 1709 will be discussed below. FIG. 10 shows an example of the configuration of a schema (data structure) of the purchase procedure. Purchase Procedure Type 1001 is an object capable of storing given data of XML format. In the present embodiment, Purchase Procedure Type 1001 stores script languages such as Java Script and ECMA Script, so that a specific purchase procedure can be described.

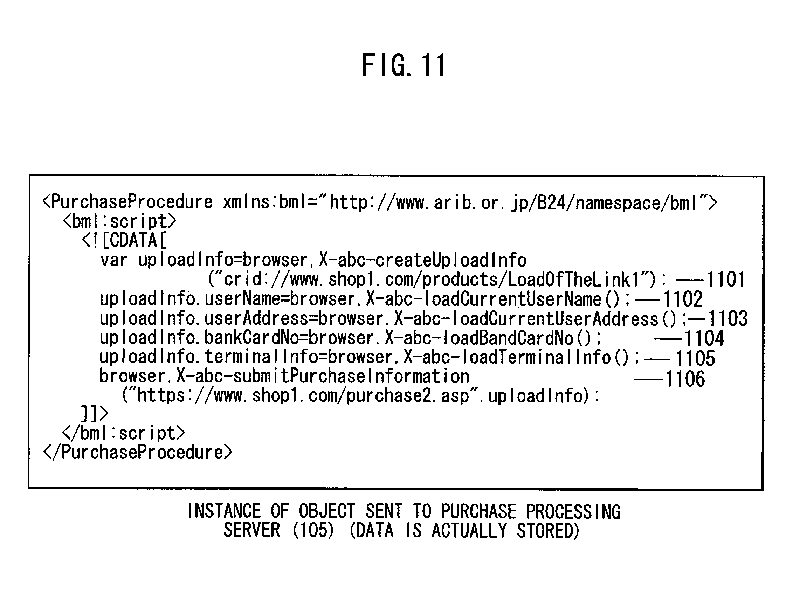

FIG. 11 shows an example of the configuration of an instance (data is actually stored) of the purchase procedure. The instance is defined by a specific sales distributor. In this example, the sales distributor requests the name, address, and bank card number of a user when selling contents.

In FIG. 10, Purchase Procedure Type 1001 describes a part of a BML document defined by ARIB STD-B24. The BML document includes the description of ECMA Script. The purchase processing section 205 generates, for the purchase processing server 105, an object (in this case, uploadInfo) which stores information necessary for purchase processing, and the purchase processing section 205 stores the identifier (in this case, "crid://www.shopl.com/products/Load Of The Link 1") of content to be purchased (1101). And then, the purchase processing section 205 sequentially reads a user name, a user address, and a bank card number, which are included in user-specific information 1202, from the secret information managing section 211 and stores the read information in the object (in this case, values are set for uploadInfo.userName, uploadInfo.userAddress, uploadInfo.bankCard No) (1102, 1103, 1104). Subsequently the purchase processing section 205 reads terminal-specific information 1201 from the secret information managing section 211 and stores the information in the object (in this case, values are set for uploadInfo and terminalInfo) (1105). Finally the purchase processing section 205 designates the URL (in this case, "https://www.shop1.com/purchase2.asp") of the purchase processing server 105, so that the information having been read according to the purchase procedure is stored in the object.

In step 306 of FIG. 3, the purchase processing of a content is requested by sending the object to the purchase processing server 105. The purchase processing server 105 stores the identifier of the content and price information which are associated with each other, and the purchase processing servers 105 obtains price information on the content having been designated by the purchase processing section 205. The purchase processing server 105 sends to a settlement server 106 the price information on the content, a user identifier described in the object, and various information (in this case, a bank card number) used for settlement. In the settlement server 106, settlement is performed using the sent price information, user identifier, and various information (in this case, a bank card number) used for settlement. Thereafter, the purchase processing server 105 is notified of a settlement result from the settlement server 106. Thus the user having the user-specific information can purchase the content having the content identifier and the purchase processing server 105 notifies the purchase processing section 205 of the completion of the purchase processing. Processing in the subsequent steps 307 and 308 of FIG. 3 is similar to that of Embodiment 1.

As described above, in the present embodiment, a purchase procedure defined for each content and a distributor who sells or manages the content is directly or indirectly indicated in the distributor-specific region of metadata. When the metadata is selected by a user, secret information is read, predetermined information is stored in an object, and the purchase processing of a content is requested according to the purchase procedure indicated in the distributor-specific region of the metadata. Thus, even in the case of different purchase procedures for respective contents and distributors who sell or manage the contents, it is possible to achieve a flexible response enabling the purchase processing of the contents.

The content distribution system, method, terminal, recording medium, and program of the present invention are the best suited to advertising digital contents by means of metadata and facilitating the purchase of the contents for the user. Further, the present invention is also applicable to the sales of products other than digital contents, for example, the sales of products related to TV programs.

## Claims

1. A content purchase processing terminal, comprising:
a secret information managing section for managing secret information on a user and the terminal,
an authentication processing section for authenticating whether metadata selected by the user has been issued by a distributor, and
a purchase processing section for requesting purchase processing of a content by means of the secret information from the secret information managing section when the metadata is successfully authenticated.

2. The content purchase processing terminal according to claim 1, further comprising an authentication information storage section for storing distributor authentication information,
wherein the authentication processing section performs authentication, by using the stored distributor authentication information, on the metadata selected by the user.

3. The content purchase processing terminal according to claim 2, further comprising an authentication information registering section for registering the distributor authentication information in the authentication information storage section,
wherein the authentication processing section performs authentication on the metadata including distributor information by using the distributor authentication information stored in the authentication information storage section, and
the authentication information registering section registers, when the metadata is successfully authenticated, distributor authentication information included in the metadata.

4. The content purchase processing terminal according to claim 3, wherein the authentication information storage section stores the distributor authentication information in a hierarchical manner,
the authentication processing section performs authentication on the metadata including the distributor information by using high-order authentication information of the distributor, the authentication information being stored in the authentication information storage section, and
the authentication information registering section updates, when the metadata is successfully authenticated, the distributor authentication information stored in the authentication information storage section to the distributor authentication information included in the metadata.

5. The content purchase processing terminal according to claim 2, wherein the distributor authentication information includes a public key for authenticating the metadata including information on the distributor.

6. The content purchase processing terminal according to claim 1, wherein the purchase processing section reads the secret information from the secret information managing section according to a purchase procedure indicated in the metadata, and requests the purchase processing of the content.

7. The content purchase processing terminal according to claim 1, wherein the purchase processing section reads the secret information from the secret information managing section according to a purchase procedure described in an application program acquired from a referent indicated in the metadata, and the purchase processing section requests the purchase processing of the content.

8. The content purchase processing terminal according to claim 1, further comprising an license processing section for acquiring license of the content having been purchased in response to a request from the purchase processing section.

9. The content purchase processing terminal according to claim 8, further comprising a content processing section for obtaining the purchased content and using the content by means of the license.

10. The content purchase processing terminal according to claim 8, wherein the license includes at least one of a decryption key of the content, a time period during which the content can be played, and the number of times of reproduction.

11. A content purchase processing method, comprising the steps of:
searching metadata and selecting metadata based on a search result,
authenticating whether the selected metadata has been issued by a distributor,
reading, when the metadata is successfully authenticated, secret information managed in a content purchase processing terminal,
requesting purchase processing of a content by means of the read secret information,
acquiring license of the purchased content, and
obtaining the purchased content.

12. A content purchase processing program run by a computer,
the program being caused to act as:
a secret information managing section for managing secret information on a user and a terminal,
an authentication processing section for authenticating whether metadata selected by the user has been issued by a distributor, and
a purchase processing section for requesting purchase processing of a content by means of the secret information from the secret information managing section when the metadata is successfully authenticated.
